# EUROPEAN PATENT SPECIFICATION

(11) **EP 1 604 357 B1**
(45) Date of publication and mention of the grant of the patent: **14.11.2007**
(21) Application number: 04716675.6
(22) Date of filing: 03.03.2004
(51) Int. Cl.: G11B 7/0045, G11B 11/105

(54) **CODE-ADAPTIVE MAGNETO-OPTICAL WRITE STRATEGY**
CODEADAPTIVE MAGNETO-OPTISCHE SCHREIBSTRATEGIE
STRATEGIE D'ECRITURE MAGNETO-OPTIQUE A CODE ADAPTATIF

(30) Priority: 12.03.2003 EP 03100628
(43) Date of publication of application: 14.12.2005
(73) Proprietor: Koninklijke Philips Electronics N.V., 5621 BA Eindhoven (NL)
(72) Inventor: VAN KESTEREN, Hans, W., NL-5656 AA Eindhoven (NL)
(74) Representative: Uittenbogaard, Frank
(86) International application number: PCT/IB2004/050191
(87) International publication number: WO 2004/081924

(56) References cited:
- EP-A- 0 477 892
- WO-A-02/103692
- WO-A-03/105127

## Description

The present invention relates to a method and apparatus for writing on a magneto-optical (MO) recording medium, e.g. a domain expansion recording medium such as a MAMMOS (Magnetic AMplifying Magneto-Optical System) or a DWDD (Domain Wall Displacement Detection) disk, comprising a recording or storage layer and an expansion or read-out layer.

In Magneto-Optical (MO) storage or recording systems a focused laser beam is applied in combination with a magnetic field. The readback signal is based on polarization changes in the reflected light. MO recording offers the advantage over phase-change recording that marks with a dimension well below the diffraction limit can be written and read out. In order to broaden the application field of MO recording the spacial density should be further increased. In MO recording small bits are written by using laser pulsed magnetic field modulation (LP-MFM). In LP-MFM, bit transitions are determined by the switching of a magnetic field and the temperature gradient induced by the switching of a laser. For read-out of the small crescent shaped marks recorded in this way magnetic super resolution (MSR) or domain expansion (DomEx) methods have to be used. These technologies are based on recording media with several magneto-static or exchange-coupled rare-earth transition-metal (RE-TM) layers. A read-out layer on the disc masks adjacent bits during reading (MSR) or expands the domain in the center of the laser spot (DomEx). An advantage of DomEx over MSR is that bits with a dimension well below the diffraction limit can be detected with a similar signal-to-noise ratio (SNR) as bits with a size comparable to or larger than the diffraction limited spot.

AC-MAMMOS (Alternating-Current Magnetic Amplifying Magneto-Optical System) is a DomEx method which is based on a magnetostatically coupled storage and expansion or read-out layer. In an AC-MAMMOS disc, a domain in the storage layer is coupled to the read-out layer through a non-magnetic intermediate layer, and the copied domain is expanded to a size larger than the diameter of the laser spot by using the external magnetic field. In the read-out process, a small recorded domain is selectively copied to the read-out layer and then expanded in the read-out layer by the external magnetic field. Thus, a large signal is obtained by reproduction of the expanded domain. After that, the expanded domain can be removed in the read-out layer in that a reverse external magnetic field is applied.

In ZF-MAMMOS (Zero-Field MAMMOS), a subsequently developed DomEx technology, a domain in the storage layer is coupled to the read-out layer through a magnetic trigger layer, and the copied domain is expanded to a size comparable to the diameter of the laser spot and subsequently collapsed as a consequence of the changing balance of the demagnetizing and stray-field forces on the domain wall. No external field is required for the read-out process.

Domain Wall Displacement Detection (DWDD) is a DomEx method based on an exchange coupled storage and read-out layer. In DWDD, marks recorded in the storage layer are transferred to a read-out or displacement layer via an intermediate magnetic switching layer as a result of exchange coupling forces. The temperature rises when a reproducing laser spot is focused on a track on the disc. When the switching layer exceeds the Curie temperature, the magnetization is lost, causing the exchange coupling force between each layer to disappear. The exchange coupling force is one of the forces holding the transferred marks in the displacement layer. When it disappears, the domain wall in the displacement layer shifts to a high temperature section which has low domain wall energy, allowing small recorded marks to expand. This allows reading with a laser beam, even if recordings have been made at high density.

In recent ZF-MAMMOS recording studies it became clear that LP-MFM writing of bits with a length well below the spot size requires high writing fields especially when these small bits are packed close together. Although these small bits can still be read out using MAMMOS with almost the same signal level as for large bits, the bit error rate increases drastically when the writing field cannot be increased to a sufficiently high value.

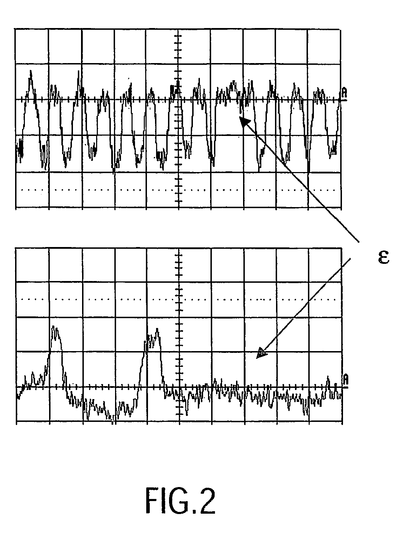

Fig. 2 shows in its upper portion a ZF-MAMMOS read-out signal for a 0.15µm packed domain, that is a plurality of successive, equal length mark and space portions. In the lower portion of Fig. 2, a ZF-MAMMOS read-out signal is shown for 0.06µm "isolated" marks. As indicated by the arrows in Fig. 2, bit errors e occur in the ZF-MAMMOS signals during the read-out operation. These bit errors ε correspond to missing peaks. The lower diagram in Fig. 2 shows, instead of two space area signals separated by a single mark peak, a broad signal generated from two adjacent space regions. The cause of these missing or unwanted peaks resides in ill-defined (e.g. upper diagram of Fig. 2) or even missing marks (e.g. lower diagram of Fig. 2) in the storage layer.

Another problem was reported for recording on a DWDD medium. It has been shown that long-run length mark transitions are shifted with respect to their ideal positions. During read-out this leads to the detection of a too short-run-length and thus to an increase in the bit error rate. This problem is caused by the varying magnitude of the stray field from the last recorded mark at the new bit transition.

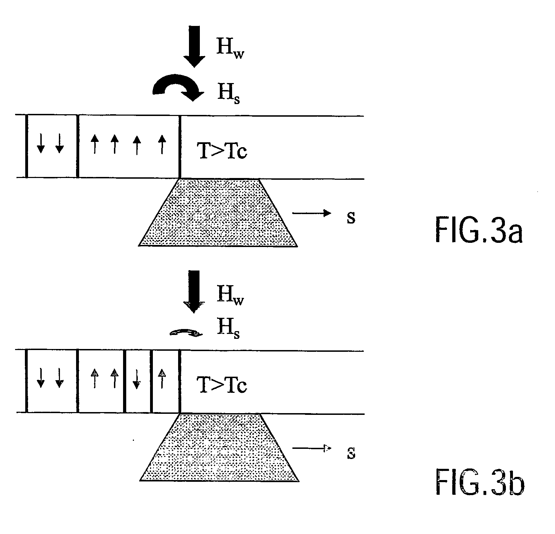

Fig. 3 shows two cross-sectional views of a storage layer of a DWDD or MAMMOS medium. In the upper example (a), the influence of the stray field Hₛ of the mark recorded last on the recorded mark transition at a temperature T higher than the Curie temperature T_{c} is shown for a long run length of the previous or most recently recorded mark. As indicated in Fig. 3, the recording medium is heated in the spot region of an impinging laser beam, wherein the spot region is caused to move relative to the recording surface in a moving direction s. In the lower example (b), the influence of the stray field Hₛ is shown for a short run length of the most recently recorded mark. If the last mark has a short run length, the sum of the external writing field H_{w} and the stray field Hₛ will be smaller than the optimal value, while for a long run length the total field will be larger than the optimal value due to the larger stray field Hₛ.

The ZF-MAMMOS problems in Fig. 2 can be explained as follows. For packed short run length domains, the stray field is small and larger recording fields should be applied to assure proper recording of marks. For the isolated marks on the other hand, the sum of the stray field Hₛ and the write field H_{w} is larger than the optimal value, which leads to a movement of the transition wall and an unstable recording process.

"Prior right document WO 03/105127 (prior art under Article 54(3) EPC) discloses a magneto-optical recording apparatus, wherein data to be recorded is transformed into channel bit data, the channel bit data being recorded onto a magneto-optical medium by means of a sequence of laser pulse and magnetic field pulse. The laser duty cycle and timing are adjusted in order to optimize recording. Furthermore, it is disclosed that the pulse frequency may be modified at the level of a sub-mark adjusting circuit based on previous and following data."

"Prior art document WO002/103692 reflecting the preamble of the independent claims discloses a magneto-optical recording apparatus wherein marks are recorded onto a medium, the marks comprising a sub-mark portions having a magnetization perpendicular to the surface of the medium in a first direction and sub-space portions having magnetization is an opposite direction, the apparatus being adapted to adjust the length of the sub-mark portion to be less than that of the sub-space portions".

It is an object of the present invention to provide a writing method and apparatus by means of which a reliable writing process can be achieved even at a high recording density. This object is achieved by means of an apparatus as claimed in claim 1 and by means of a method as claimed in claim 10.

According to an aspect of the invention, the magnetic field magnitude and/or the laser power and/or laser timing can be varied during writing or recording in such a way that the stray field variations caused by the changes in previous run length(s) are compensated for. Variations in the position of the domain walls and ill-defined or missing marks can be minimized thereby.

In particular, a run length of said previous data pattern can be converted into said control signal. The control signal may then be generated such that the predetermined laser power level and/or the magnitudes of the two predetermined field levels for writing a mark or a space, respectively, are increased for a decreased run length of the previous data pattern, or vice versa. The run length may be a run length directly preceding a current data pattern to be recorded using the adjusted power level and/or the at least two adjusted field levels. An easy solution to the above-mentioned DWDD bit-shift and ZF-MAMMOS short-mark problems is provided thereby. Especially, a variation of the laser power may easily be implemented due to the fact that the required electronics is already present in most systems. The magnetic field variation offers an effective solution because variations in the stray field can be directly compensated by an opposite variation of the external writing field. Of course, a combined variation of laser timing and/or laser power and external magnetic field may also be used to compensate for the stray field variations and thus alleviate the above problems in an even more efficient way.

The above suggested variations may be based on a look-up table for storing a relationship between a predetermined number of preceding channel bits and corresponding values of the control signal. As an alternative, the control signal may be based on an electronic integration of a data pattern directly preceding a current data bit to be recorded using said adjusted power level and/or timing and/or said adjusted field level. The control signal may then be generated based on the result of, for example, an integration of the preceding channel bits with an exponentially decaying weighting factor, which factor drops off to zero for bits far away from the transition. The decay time constant may be set to correspond to a few channel bit periods.

The control signal in combination with the current channel-bit signal generates the input voltage to be supplied to a coil and/or laser driving circuit of the writing means for writing the current channel bit to the storage medium.

Other advantageous further developments are defined in the dependent claims.

In the following, the present invention will be described on the basis of embodiments and with reference to the accompanying drawings in which:
Fig. 1 shows a schematic diagram of a conventional magneto-optical disk player in which the present invention can be implemented;
Fig. 2 shows diagrams indicating MAMMOS read-out signals for different data patterns;
Fig. 3 shows diagrams indicating the influence of a stray field on the recorded mark transition for situations where the latest recorded mark is long and short, respectively;
Fig. 4 shows signal waveforms of a conventional write strategy and two write strategies according to the present invention;
Fig. 5 shows a diagram indicating forces on a transition wall during a writing process;
Fig. 6A shows a schematic block diagram of an adaptation circuitry according to a first embodiment of the present invention; and
Fig. 6B shows a schematic block diagram of an adaptation circuitry according to a second embodiment of the present invention.

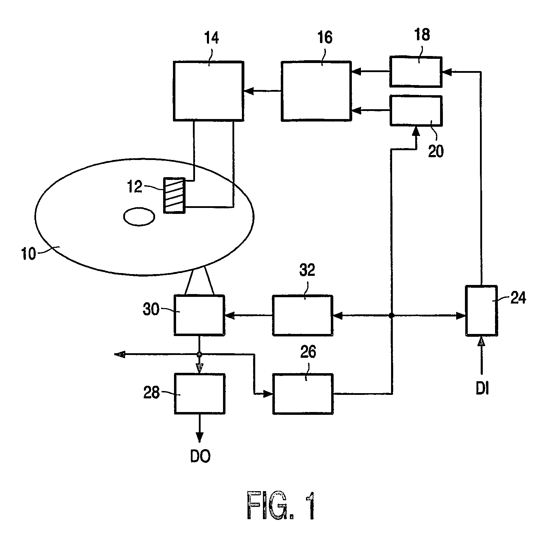

Embodiments of the present invention will now be described on the basis of a MAMMOS disk player and recorder as shown in Fig. 1.

Fig. 1 schematically shows the construction of the disk player in which the present invention can be implemented. The disk player comprises an optical pick-up unit 30 having a laser light radiating section for irradiation of a magneto-optical recording medium or record carrier 10, such as a magneto-optical disk, with light that has been converted, during recording, into pulses with a period synchronized with code data, and a magnetic field applying section comprising a magnetic head 12 which applies a magnetic field in a controlled manner at the time of recording and for AC-MAMMOS also during playback on the magneto-optical disk 10. In the optical pick-up unit 30, a laser is connected to a laser driving circuit which receives recording and read-out pulses from a recording/read-out pulse adjusting unit 32 so as to control the pulse amplitude and timing of the laser of the optical pick-up unit 30 during a recording and read-out operation. The recording/read-out pulse adjusting circuit 32 receives a clock signal from a clock generator 26 which may comprise a PLL (Phase Locked Loop) circuit.

It is noted that, for reasons of simplicity, the magnetic head 12 and the optical pickup unit 30 are shown on opposite sides of the disk 10 in Fig. 1. However, according to the practical embodiments, they may be arranged on the same side of the disk 10. The magnetic head 12 is connected to a head driver unit 14 and receives, during recording, code-converted data via a pulse adjusting circuit 18 from a modulator 24. The modulator 24 converts input recording data DI into a prescribed code.

During of AC-MAMMOS playback, the head driver 14 receives a timing signal via a playback adjusting circuit 20 arranged to generate a synchronization signal for adjusting the timing and amplitude of pulses applied to the magnetic head 12. A recording/playback switch 16 is provided for switching or selecting the respective signal to be supplied to the head driver 14 during recording and during playback. No field is required during readout for DWDD or ZF-MAMMOS, and the playback adjusting circuit 20 can be left out. In that case the switch 16 switches the field off during readout.

Furthermore, the optical pick-up unit 30 comprises a detector for detecting laser light reflected from the disk 10 and for generating a corresponding reading signal applied to a decoder 28 which is arranged to decode the reading signal so as to generate output data DO. Furthermore, the reading signal generated by the optical pick-up unit 30 is supplied to a clock generator 26 in which a clock signal obtained from embossed clock marks, a wobble pattern, and /or the data is extracted or recovered, and which supplies the clock signal for synchronization purposes to the recording pulse adjusting circuit 32, the modulator 24, and the playback adjusting circuit 20. In particular, a data channel clock may be generated in the PLL circuit of the clock generator 26.

In the case of data recording, the laser of the optical pick-up unit 30 is modulated with a fixed frequency corresponding to the period of the data channel clock, and the data recording area or spot of the rotating disk 10 is locally heated at equal distances. Additionally, the data channel clock output by the clock generator 26 controls the modulator 24 to generate a data signal with the standard clock period. The recording data are modulated and code-converted by the modulator 24 to obtain a binary run length information corresponding to the information of the recording data.

The structure of the magneto-optical recording medium 10 may correspond to the structure described in JP-A-2000-260079.

According the embodiments, it is proposed to control at least one of the following: laser timing, laser power, and externally applied magnetic field strength during recording such that the stray field variations are compensated for. The variation of the magnetic field at the storing layer caused thereby depends on the run length of, especially, previously recorded marks.

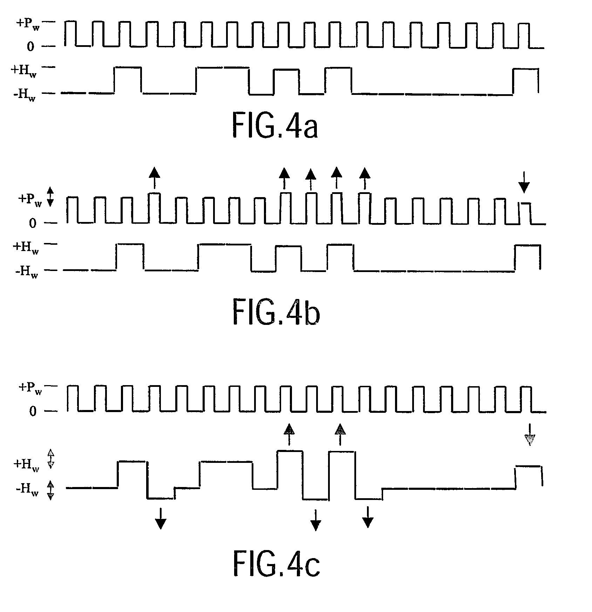

Fig. 4 shows waveform pattern of the writing laser power P_{w} and the external magnetic writing field H_{w}. In Fig. 4, waveform pattern (a) corresponds to a conventional LP-MFM write strategy. The field polarity is chosen in accordance with the data to be written, while the laser is pulsed at a fixed frequency that corresponds to the channel bit frequency. The pulsing of the laser leads to a sharper temperature profile as compared with a continuously applied laser power. The laser pulse duty cycle (usually around 40%) and pulse delay with respect to the field switching are chosen such that transition jitter and bit error rate are minimized. Because of the sharp temperature gradient achieved by the pulsed laser beam and the fast increase of the coercivity in the storage layer during cooling down to the compensation temperature of the ferrimagnetic storage layer, transition a just written should be well defined and fixed before the next transition is written if the mark length is comparable to or larger than to the spot size.

Probably the easiest way to solve the DWDD bit-shift and ZF-MAMMOS short-mark recording problem would be a modification of the laser pulsing strategy, i.e. varying the timing and/or magnitude of the laser pulses such that the bit shifts are compensated and short marks are recorded more optimally. Waveform pattern (b) of Fig. 4 shows such a write strategy, where the laser power is varied in accordance with the previously recorded data pattern. Especially a variation of the laser power is relatively easy to implement because electronics for laser power adjustment are already present in many systems. Increasing the laser power (upward arrows) will lead to a backward shift of the transition because a point higher on the coercivity versus temperature curve will be used. In the same way a reduced laser power (downward arrow) will lead to a forward shift. In particular, the laser power is increased during recording to compensate for a decrease in the stray field caused by a short preceding mark or space, and vice versa. A disadvantage of changing the timing or the magnitude of the laser pulses is that it will lead to varying cross write effects and a varying thermal history which complicates the optimization of the write strategy.

Another possibility is to vary the field magnitude during writing. This is illustrated in waveform pattern (c) of Fig. 4. Although more difficult to implement because the MFM coil driver electronics has to be modified quite a lot, it offers an intrinsically better solution because the variations in stray field are directly compensated by the opposite variation in external writing field. Here, the magnitude of the external magnetic field is increased during recording to compensate for a decrease in the stray field caused by a short preceding mark or space, and vice versa.

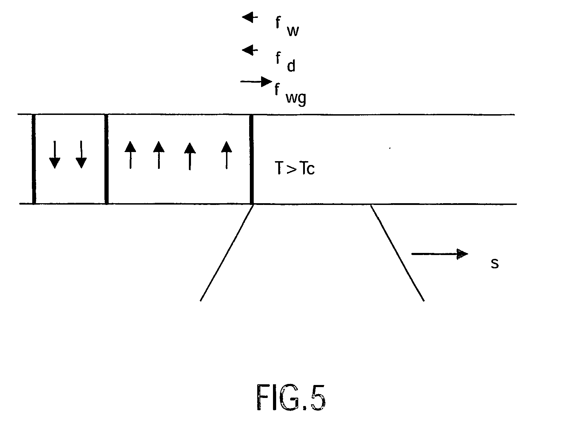

Fig. 5 shows a diagram similar to the diagrams in Fig. 3 and indicates forces on a transition wall during the writing procedure. As is shown in Fig. 5, a number of forces act on the transition wall during writing. The wall gradient force f_{wg} is directed towards the next transition whereas the forces f_{w} and f_{d} due to the external write field and demagnetizing field, respectively, at the transition are directed in the opposite direction. The wall gradient force f_{wg} is a consequence of the wall energy being lowest at the position of the highest temperature. The demagnetizing field is determined by the total internal stray field at the transition, which includes the stray field of the previous marks as shown in Fig. 3 but also stray fields from marks in neighboring tracks. The optimal external writing field should on the one hand be sufficient to suppress sub-domain formation within the written mark and on the other hand balance the forces on the domain wall during cooling down. According to the embodiments, therefore, it is proposed to use a writing field H_{w} of which the magnitude depends on the just bit(s) written. This writing field H_{w} is chosen such that it balances the forces f_{w}, f_{d} and f_{wg} on the domain wall. Balancing the forces on the transition can be quite important because an imbalance may lead to a movement of the wall and/or change in the shape of the transition, and thus to increased jitter levels. Even a total collapse of marks may occur for small mark lengths (missing peaks). In Fig. 4, the upward arrows for the positive writing fields and the downward arrows for the negative writing fields in the waveform pattern (c) indicate the writing fields with a higher magnitude to compensate for the smaller stray field force during writing of these bits or marks, while the opposite is the case, for example, for the downward arrow for the positive writing field.

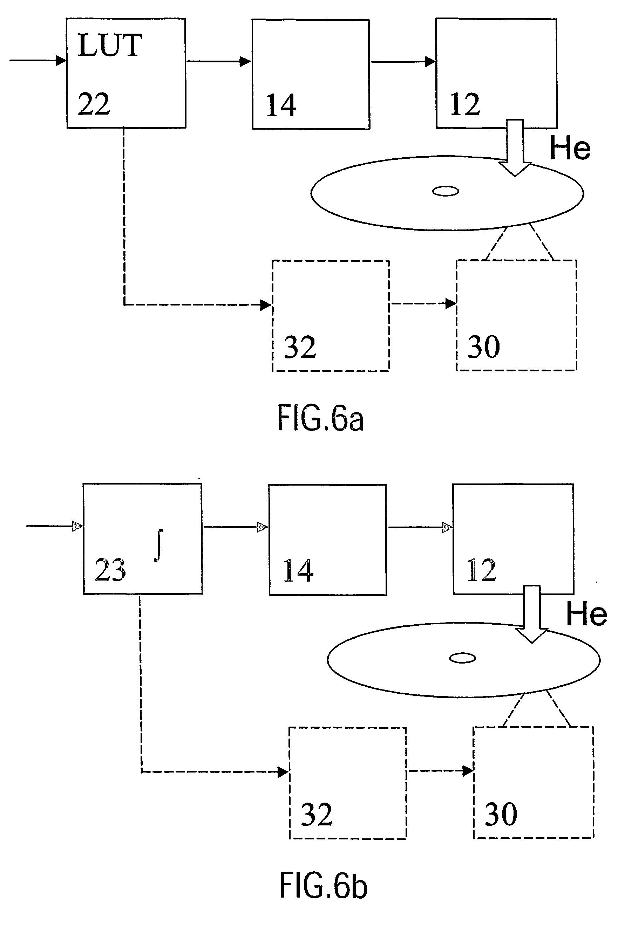

For writing according to the proposed writing scheme, the MFM-coil driver, i.e. the head driver unit 14 of Fig. 1, may be modified in that an upstream adjustment circuit according to the first and second embodiments shown in Figs. 6A and 6B, respectively is provided. The input voltage controls the output current supplied to the coil of the magnetic head 12 as a result of this.

In the first embodiment of Fig. 6A, the input voltage of the head driver unit 14 is adjusted by means of a look-up table 22. The look-up table 22 may be used to find the required input voltage or some other control signal for the head driver unit 14. In this look-up table 22, the most recently recorded data pattern, for example the latest run length, is linked with or related to the required voltage or some other control signal for the bit or mark to be recorded. Additionally or alternatively, as indicated by the dotted circuit parts in Fig. 6A, the look-up table 22 may be adapted to store control values or signals to be supplied to the pulse adjusting circuit 32 so as to generate a required magnitude and/or timing of the laser pulse.

In the second embodiment of Fig. 6B, a small integrating circuit 23 is provided at the input of the head driver unit 14. The integration behavior of this integrating circuit 23 should be chosen to be such that it mimics the stray field effect of the most recent channel bits. As an example, the integration may be performed over the preceding channel bits with an exponentially decaying weighting factor for the preceding channel bits, and the decay time constant of the weighting factor is set in the range of e.g. one to three channel bit periods. The integrated value obtained at the output of the integrating circuit and the current channel bit signal determine the input voltage or some other control signal to the head driver unit 14, where it is converted into a modified writing current I_{w} required for the bit to be recorded. Similar to Fig. 6B, the integrating circuit 23 may alternatively or additionally be used to generate an input control signal for the pulse adjusting circuit 32 so as to generate a required magnitude and/or timing of the laser pulse.

It is noted that the present invention may be applied to any writing or recording system for magneto-optical disk storage systems in which mark patterns with different run lengths are written. The preferred embodiment may thus vary within the scope of the attached claims.

## Claims

1. An apparatus for writing data to a storage layer of a magneto-optical recording medium (10), said apparatus comprising:
a1) a modulator for converting the data to be written into code-converted data;
a) writing means (12,30) for writing said code-converted data to said storage layer using a radiation beam of a predetermined power level and timing and a magnetic field modulated to at least two predetermined field levels in accordance with said code-converted data;
**characterized in that** the apparatus is further comprising:
b) conversion means (22; 23) for converting a code-converted data previously supplied to said writing means into a control signal; and
c) adjusting means (14; 32) for receiving said control signal and for adjusting at least one of the following: said predetermined power level, said timing, and said at least two predetermined field levels in dependence on said control signal.

2. A writing apparatus according to claim 1, wherein said conversion means (22; 23) is adapted to convert a run length of said previous code-converted data into said control signal.

3. A writing apparatus according to claim 2, wherein said run length directly precedes a current bit to be recorded using at least one of the following: said adjusted power level, said timing, and said at least two adjusted field levels.

4. A writing apparatus according to claim 2 or 3, wherein said conversion means (22; 23) is arranged to generate said control signal such that at least one of the following: said predetermined power level and said at least two predetermined field levels is increased in magnitude at a decreased run length of said previous code-converted data, or vice versa.

5. A writing apparatus according to claim 1, wherein said adjusting means comprises a look-up table (22) for storing a relationship between a predetermined number of code-converted data and corresponding values of said control signal.

6. A writing apparatus according to claim 1, wherein said adjusting means comprises an integration means (23) for integrating a code-converted data directly preceding a current code-converted data to be recorded using said adjusted power level and/or timing and/or one of said at least two adjusted field levels and for generating said control signal in dependence on the result of said integration.

7. A writing apparatus according to claim 6, wherein the integration means (23) involves an integration over the preceding channel bits with an exponentially decaying weighting factor for the preceding channel bits, and the decay time constant of the weighting factor is set in the range of one to three channel bit periods.

8. A writing apparatus according to any one of claims 1 to 7, wherein said control signal in combination with a current channel bit signal forms an input voltage to be supplied to a coil and/or laser driving circuit (14, 32) of said writing means.

9. A writing apparatus according to any one of claims 1 to 8, wherein said writing apparatus is part of a disk recorder for MAMMOS or DWDD disks.

10. A writing method for writing data to a storage layer of a magneto-optical recording medium (10), said method comprising the steps of:
a1) converting the data to be written into code-converted data;
a) writing said code-converted data to said storage layer using a radiation beam of a predetermined power level and timing and a magnetic field modulated to at least two predetermined field levels in accordance with said writing data;
the method **characterized by**
b) adjusting at least one of the following said: predetermined power level and timing and said at least two predetermined field levels in dependence on code-converted data previously used in said writing step.

11. A method according to claim 10, wherein said adjusting step comprises the steps of converting a run length of said previous code-converted data pattern into a control signal, and controlling at least one of the following: said predetermined power level and timing and said at least two predetermined field levels in dependence on said control signal.

12. A method according to claim 11, wherein said run length directly precedes a current code-converted data to be recorded using at least one of the following: said adjusted power level, said timing, and said at least two adjusted field levels.

13. A method according to claim 11 or 12, wherein said control signal is generated such that at least one of the following: said predetermined power level and said at least two predetermined field levels is increased hi magnitude with a decrease in said run length of said previous code-converted data, and vice versa.

14. A method according to claim 10, further comprising the steps of storing a relationship between a predetermined number of code-converted data and corresponding values of said control signal, and using said stored relationship for said adjustment in said adjusting step.

15. A method according to claim 10, further comprising the steps of integrating a code-converted data directly preceding a current code-converted data to be recorded by means of at least one of the following: said adjusted power level, said timing, and said at least two adjusted field levels, and using the result of said integration for said adjustment in said adjusting step.

16. A method according to claim 15, wherein the integration step involves an integration over the preceding channel bits with an exponentially decaying weighting factor for the preceding channel bits, and the decay time constant of the weighting factor is set in the range of one to three channel bit periods.

## Patentansprüche

1. Vorrichtung zum Schreiben von Daten auf eine Speicherschicht eines magneto-optischen Aufzeichnungsmediums (10), wobei die Vorrichtung Folgendes umfasst:
a1) einen Modulator zum Konvertieren der zu schreibenden Daten in code-konvertierte Daten;
a) Schreibmittel (12; 30) zum Schreiben der code-konvertierten Daten auf die Speicherschicht unter Verwendung eines Strahlungsstrahls einer vorgegebenen Energiestärke und Zeitgebung und eines Magnetfelds, das mindestens auf zwei vorgegebene Feldstärken moduliert ist gemäß den code-konvertierten Daten;
**dadurch gekennzeichnet, dass** die Vorrichtung ferner Folgendes umfasst:
b) Konvertierungsmittel (22; 23) zum Konvertieren von code-konvertierten Daten, die zuvor den Schreibmitteln zugeführt worden sind, in ein Steuersignal; und
c) Einstellmittel (14; 32) zum Empfangen des Steuersignals und zum Einstellen mindestens eines der folgenden: der vorgegebenen Energiestärke, der Zeitgebung und der mindestens zwei vorgegebenen Feldstärken in Abhängigkeit von dem Steuersignal.

2. Schreibvorrichtung nach Anspruch 1, wobei die Konvertierungsmittel (22; 23) dazu ausgelegt sind, eine Lauflänge der zuvor code-konvertierten Daten in das Steuersignal zu konvertieren.

3. Schreibvorrichtung nach Anspruch 2, wobei die Lauflänge direkt einem aktuellen Bit vorangeht, welches unter Verwendung mindestens eines der folgenden: der eingestellten Energiestärke, der Zeitgebung und der mindestens zwei eingestellten Feldstärken aufgezeichnet werden soll.

4. Schreibvorrichtung nach Anspruch 2 oder 3, wobei die Konvertierungsmittel (22; 23) angeordnet sind, um das Steuersignal so zu erzeugen, dass mindestens eines der folgenden eintritt: die vorgegebene Energiestärke und die mindestens zwei vorgegebenen Feldstärken werden bei verringerter Lauflänge der zuvor code-konvertierten Daten in der Stärke erhöht, oder umgekehrt.

5. Schreibvorrichtung nach Anspruch 1, wobei die Einstellmittel eine Nachschlagtabelle (22) zum Speichern eines Verhältnisses zwischen einer vorgegebenen Anzahl von code-konvertierten Daten und entsprechenden Werten des Steuersignals umfasst.

6. Schreibvorrichtung nach Anspruch 1, wobei die Einstellmittel Integrationsmittel (23) zum Integrieren von code-konvertierten Daten umfasst, die direkt aktuellen code-konvertierten Daten vorangehen, die unter Verwendung der eingestellten Energiestärke und/oder der Zeitgebung und/oder der mindestens zwei eingestellten Feldstärken aufgezeichnet werden sollen, und zum Erzeugen des Steuersignals in Abhängigkeit von dem Ergebnis der Integration.

7. Schreibvorrichtung nach Anspruch 6, wobei die Integrationsmittel (23) eine Integration über die vorangehenden Kanalbits mit einem exponentiell abklingenden Gewichtungsfaktor für die vorangehenden Kanalbits einschließt und die Abklingkonstante des Gewichtungsfaktors im Bereich von einer bis drei Kanalbitperioden eingestellt ist.

8. Schreibvorrichtung nach einem der Ansprüche 1 bis 7, wobei das Steuersignal in Kombination mit einem aktuellen Kanalbitsignal eine einer Spule und/oder Lasertreiberschaltung (14; 32) der Schreibmittel zuzuführende Eingangsspannung bildet.

9. Schreibvorrichtung nach einem der Ansprüche 1 bis 8, wobei die Schreibvorrichtung Teil eines Disk-Recorders für MAMMOS- oder DWDD-Disks ist.

10. Schreibverfahren zum Schreiben von Daten auf eine Speicherschicht eines magneto-optischen Aufzeichnungsmediums (10), wobei das Verfahren die folgenden Schritte umfasst:
a1) Konvertieren der zu schreibenden Daten in code-konvertierte Daten;
a) Schreiben der code-konvertierten Daten auf die Speicherschicht unter Verwendung eines Strahlungsstrahls einer vorgegebenen Energiestärke und Zeitgebung und eines Magnetfelds, das auf mindestens zwei vorgegebene Feldstärken moduliert ist gemäß den Schreibdaten;
wobei das Verfahren **gekennzeichnet ist durch**:
b) Einstellen mindestens eines der folgenden: der vorgegebenen Energiestärke und Zeitgebung und der mindestens zwei vorgegebenen Feldstärken in Abhängigkeit von den zuvor in dem Schreibschritt verwendeten code-konvertierten Daten.

11. Verfahren nach Anspruch 10, wobei der Einstellschritt die Schritte des Konvertierens einer Lauflänge des zuvor code-konvertierten Datenmusters in ein Steuersignal und des Steuerns mindestens eines der folgenden umfasst: der vorgegebenen Energiestärke und Zeitgebung und der mindestens zwei Feldstärken in Abhängigkeit von dem Steuersignal.

12. Verfahren nach Anspruch 11, wobei die Lauflänge direkt aktuellen code-konvertierten Daten vorangeht, die unter Verwendung mindestens eines der folgenden: der vorgegebenen Energiestärke, der Zeitgebung und der mindestens zwei eingestellten Feldstärken aufgezeichnet werden sollen.

13. Verfahren nach Anspruch 11 oder 12, wobei das Steuersignal so erzeugt wird, dass mindestens eines der folgenden eintritt: die vorgegebene Energiestärke und die mindestens zwei vorgegebenen Feldstärken werden bei Verringerung der Lauflänge der zuvor code-konvertierten Daten in der Stärke erhöht, und umgekehrt.

14. Verfahren nach Anspruch 10, ferner umfassend die Schritte des Speicherns eines Verhältnisses zwischen einer vorgegebenen Anzahl code-konvertierter Daten und entsprechender Werte des Steuersignals und Verwenden des gespeicherten Verhältnisses zur Einstellung in dem Einstellschritt.

15. Verfahren nach Anspruch 10, ferner umfassend die Schritte des Integrierens code-konvertierter Daten, die aktuellen code-konvertierten Daten direkt vorangehen, welche unter Verwendung mindestens eines der folgenden: der eingestellten Energiestärke, der Zeitgebung und der mindestens zwei angepassten Feldstärken aufgezeichnet werden sollen, und des Verwendens des Ergebnisses des Integrierens für die Einstellung in dem Einstellschritt.

16. Verfahren nach Anspruch 15, wobei der Integrationsschritt eine Integration über die vorangehenden Kanalbits mit einem exponentiell abklingenden Gewichtungsfaktor für die vorangehenden Kanalbits einschließt und die Abklingzeitkonstante des Gewichtungsfaktors im Bereich von einer bis drei Kanalbitperioden eingestellt ist.

## Revendications

1. Appareil destiné à écrire des données sur une couche de stockage d'un support d'enregistrement magnéto-optique (10), ledit appareil comportant:
a1) un modulateur pour convertir les données à écrire en données converties par code;
a) des moyens d'écriture (12, 30) pour écrire lesdites données converties en code sur ladite couche de stockage au moyen d'un faisceau de rayonnement d'un niveau de puissance et d'un rythme prédéterminés et d'un champ magnétique modulé sur au moins deux niveaux de champ prédéterminés conformément auxdites données converties en code;
**caractérisé en ce que** l'appareil comprend en outre:
b) un moyen de conversion (22; 23) pour convertir une donnée convertie en code précédemment fournie auxdits moyens d'écriture en un signal de commande; et
c) des moyens de réglage (14; 32) pour recevoir ledit signal de commande et pour régler au moins une des variables suivantes: ledit niveau de puissance prédéterminé, ledit rythme, et lesdits au moins deux niveaux de champ prédéterminés en fonction dudit signal de commande.

2. Appareil d'écriture suivant la revendication 1, dans lequel ledit moyen de conversion (22; 23) est à même de convertir une plage des dites données converties en code précédentes en ledit signal de commande.

3. Appareil d'écriture suivant la revendication 2, dans lequel ladite plage précède directement un bit actuel à enregistrer au moyen d'au moins une des variables suivantes: ledit niveau de puissance réglé, ledit rythme, et lesdits au moins deux niveaux de champ réglés.

4. Appareil d'écriture suivant la revendication 2 ou 3, dans lequel ledit moyen de conversion (22; 23) est prévu pour générer ledit signal de commande de telle sorte qu'au moins l'une des variables suivantes: ledit niveau de puissance prédéterminé et lesdits au moins deux niveaux de champ prédéterminés, soient accrus en amplitude pour une diminution de la longueur de plage desdites données converties en code précédentes, ou vice versa.

5. Appareil d'écriture suivant la revendication 1, dans lequel ledit moyen de réglage comprend une table de consultation (22) destinée à stocker une relation entre un nombre prédéterminé de données converties en code et des valeurs correspondantes dudit signal de commande.

6. Appareil d'écriture suivant la revendication 1, dans lequel ledit moyen de réglage comprend un moyen d'intégration (23) pour intégrer une donnée convertie en code qui précède directement une donnée convertie en code actuelle à enregistrer au moyen dudit niveau de puissance réglé et/ou du rythme et/ou de l'un desdits au moins deux niveaux de champ réglés et pour générer ledit signal de commande en fonction du résultat de ladite intégration.

7. Appareil d'écriture suivant la revendication 6, dans lequel le moyen d'intégration (23) implique une intégration sur les bits de canal précédents avec un facteur de pondération décroissant de manière exponentielle pour les bits de canal précédents, et la constante de temps de décroissance du facteur de pondération est réglée dans l'intervalle de une à trois périodes de bits de canal.

8. Appareil d'écriture suivant l'une quelconque des revendications 1 à 7, dans lequel ledit signal de commande en combinaison avec un signal de bit de canal actuel forme une tension d'entrée à fournir à un circuit de pilotage de bobine et/ou de laser (14, 32) dudit moyen d'écriture.

9. Appareil d'écriture suivant l'une quelconque des revendications 1 à 8, dans lequel ledit appareil d'écriture fait partie d'un enregistreur à disque pour des disques MAMMOS ou DWDD.

10. Procédé d'écriture destiné à écrire des données sur une couche de stockage d'un support d'enregistrement magnéto-optique (10), ledit procédé comprenant les étapes suivantes:
a1) convertir les données à écrire en données converties par code;
a) écrire les données converties en code sur ladite couche de stockage au moyen d'un faisceau de rayonnement d'un niveau de puissance et d'un rythme prédéterminés et d'un champ magnétique modulé sur au moins deux niveaux de champ prédéterminés conformément auxdites données d'écriture;
le procédé étant **caractérisé par**
b) le réglage d'au moins l'un des facteurs suivants: ledit niveau de puissance et le rythme prédéterminés et lesdits au moins deux niveaux de champ prédéterminés en fonction des données converties en code précédemment utilisées dans ladite étape d'écriture.

11. Procédé suivant la revendication 10, dans lequel ladite étape de réglage comprend les étapes de conversion d'une longueur de plage dudit motif de données converti en code précédent en un signal de commande, et la commande d'au moins une des variables suivantes: ledit niveau de puissance et ledit rythme prédéterminés et lesdits au moins deux niveaux de champ prédéterminés en fonction du signal de commande.

12. Procédé suivant la revendication 11, dans lequel la longueur de plage précède directement une donnée convertie en code actuelle à enregistrer au moyen d'au moins une des variables suivantes: ledit niveau de puissance réglé, ledit rythme, et lesdits au moins deux niveaux de champ réglés.

13. Procédé suivant la revendication 11 ou 12, dans lequel ledit signal de commande est généré de telle sorte qu'au moins l'une des variables suivantes: ledit niveau de puissance prédéterminé et lesdits au moins deux niveaux de puissance prédéterminés soient accrus en amplitude avec une diminution de ladite longueur de plage de ladite donnée converties en code précédente, et vice versa.

14. Procédé suivant la revendication 10, comprenant en outre les étapes de stockage d'une relation entre un nombre prédéterminé de données converties en code et des valeurs correspondantes dudit signal de commande, et d'utilisation de ladite relation stockée pour ledit réglage dans ladite étape de réglage.

15. Procédé suivant la revendication 10, comprenant en outre les étapes d'intégration d'une donnée convertie en code précédant directement une donnée convertie en code actuelle à enregistrer au moyen d'au moins une des variables suivantes: ledit niveau de puissance réglé, ledit rythme et lesdits au moins deux niveaux de champ réglés, et l'utilisation du résultat de ladite intégration pour ledit réglage dans ladite étape de réglage.

16. Procédé suivant la revendication 15, dans lequel l'étape d'intégration implique une intégration sur les bits de canal précédents avec un facteur de pondération à décroissance exponentielle pour les bits de canal précédents, et la constante de temps de décroissance du facteur de pondération est réglée dans l'intervalle d'une à trois périodes de bit de canal.
